# EUROPEAN PATENT APPLICATION

(11) **EP 2 818 640 A2**
(43) Date of publication of application: **31.12.2014**
(21) Application number: 14172631.5
(22) Date of filing: 16.06.2014
(51) Int. Cl.: F01D 9/02, F01D 17/14, F02C 6/12, F01N 3/28, F01N 3/20, F01D 17/10

(54) **Turbocharger with annular rotary bypass valve for the turbine, and catalyst disposed in the bypass channel of the turbine housing**

(30) Priority: 26.06.2013 US 201361839533 P
(71) Applicant: Honeywell International Inc., Morristown, NJ 07962-2245 (US)
(72) Inventor: Di Martino, Paolo, Morristown, NJ New Jersey 07962-2245 (US); Toufar, Pavel, Morristown, NJ New Jersey 07962-2245 (US); Lombard, Alain, Morristown, NJ New Jersey 07962-2245 (US); Chobola, Petr, Morristown, NJ New Jersey 07962-2245 (US); Pohorelsky, Ludek, Morristown, NJ New Jersey 07962-2245 (US)
(74) Representative: Houghton, Mark Phillip

(57) **Abstract**

A turbocharger includes a turbine wheel (54) mounted within a turbine housing (52) and connected to a compressor wheel (34) by a shaft (36). The turbine housing defines an exhaust gas inlet (56) connected to a volute (58) that surrounds the turbine wheel, and an axial bore (62) through which exhaust gas that has passed through the turbine wheel is discharged from the turbine housing. The turbine housing further defines an annular bypass passage (60) surrounding the bore and arranged to allow exhaust gas to bypass the turbine wheel. An annular bypass valve (70) is disposed in the bypass passage. The bypass valve comprises a fixed annular valve seat (72) and a rotary annular valve member (74) arranged coaxially with the valve seat. A catalyst (120) is disposed in the annular bypass passage (60). The catalyst is formed of spaced-apart, undulating metal fins (122) coated with a catalyst material and contained in a generally annular cage (130).

## Description

### BACKGROUND OF THE INVENTION

The present disclosure relates to exhaust gas-driven turbochargers, and particularly to bypass arrangements that allow exhaust gas to bypass the turbine under certain engine operating conditions. The disclosure relates more particularly to turbocharger systems that include a catalyst downstream of the turbine.

In a conventional turbocharger, the turbine housing defines a bypass conduit located generally to one side of the main bore through the housing, and the bypass conduit is connected to the exhaust gas inlet or the volute of the housing via a bypass valve. The bypass valve typically is a swing or poppet style valve comprising a circular valve member that is urged against a flat valve seat surrounding the bypass passage opening. The valve usually is arranged such that the exhaust gas pressure acts on the valve member in a direction tending to open the valve. One drawback associated with such an arrangement is that it is difficult to completely seal the valve in the closed position, since gas pressure tends to open the valve. Leakage past the closed bypass valve is a cause of performance degradation of the turbine and, hence, the turbocharger and its associated engine. The typical solution to the leakage issue is to preload the bypass valve member against the valve seat, but often this does not fully eliminate leakage, and in any event it causes additional problems such as an increase in the required actuation force for opening the valve.

Furthermore, swing or poppet valves tend to be poor in terms of controllability, especially at the crack-open point, and it is common for the bypass flow rate to be highly nonlinear with valve position, which makes it very difficult to properly regulate the bypass flow rate. This leads to problems such as poor transient response of the turbocharger and engine system.

Applicant's U.S. Patent No. 8,353,664 disclosed an improved turbocharger having an annular rotary bypass valve that overcomes or reduces problems such as noted above.

### BRIEF SUMMARY OF THE DISCLOSURE

The present disclosure concerns a further improvement to the turbocharger described in the '664 patent. In particular, the present disclosure relates to development of such a turbocharger for use in a system that includes a catalytic after-treatment device downstream of the turbine for treatment of the exhaust gases to reduce emissions. In order to pass applicable government regulations related to emissions, it is frequently necessary or desirable to include such an after-treatment device to reduce emissions such as NOx, particulate matter (PM), and/or others. A catalytic treatment device generally requires the exhaust gases to have a relatively high temperature in order for the catalyst to work properly. The catalyst becomes effective for reducing emissions only when it reaches or exceeds a particular temperature known as the "light-off" temperature.

Any components wetted by the exhaust gases on their way to the catalyst will act as a heat sink tending to reduce the temperature of the gases. Generally, the more massive such components are and the greater their wetted surface area, the more the temperature of the gases will be reduced. Accordingly, it would be desirable to minimize exposure of the exhaust gases to wetted surfaces prior to reaching the catalyst. Typically in a turbocharged engine system, the catalyst is disposed in the exhaust system downstream of the turbine. Thus, whether exhaust gases pass through the turbine wheel or are bypassed around the turbine wheel by the opening of a waste gate or bypass valve, the exhaust gases then pass through the catalyst before being discharged from the exhaust pipe. A drawback of this arrangement is that during start-up when the engine and turbocharger and catalyst are in a cold state, even though the waste gate or bypass valve is opened to bypass the exhaust gases around the turbine wheel, which operates as a significant heat sink, heating of the catalyst is still relatively slow because the bypass system itself is a heat sink that absorbs some of the heat of the gases. This delays the "light-off" of the catalyst.

The turbocharger described herein aims to reduce the temperature reduction of the exhaust gases, by moving the catalyst from a location downstream of the turbine housing, into the annular bypass passage that also accommodates the rotary bypass valve. In one embodiment described herein, the catalyst is located upstream of the bypass valve. As a consequence, the exhaust gases bypassing the turbine wheel are exposed to a substantially reduced amount of surface area and mass before they reach the catalyst, relative to prior-art turbochargers in which the gases must pass entirely through the bypass system before reaching the catalyst.

Thus, one embodiment of a turbocharger described herein comprises a compressor wheel mounted within a compressor housing, and a turbine wheel mounted within a turbine housing and connected to the compressor wheel by a shaft. The turbine housing defines an exhaust gas inlet connected to a volute that surrounds the turbine wheel, and an axial bore through which exhaust gas that has passed through the turbine wheel is discharged from the turbine housing. The turbine housing also defines an annular bypass passage surrounding the bore and arranged to allow exhaust gas to bypass the turbine wheel, and there is an annular bypass valve disposed in the bypass passage. The bypass valve comprises a fixed annular valve seat and a rotary annular valve member arranged coaxially with the valve seat relative to an axis, the valve member being disposed against the valve seat and being rotatable about the axis for selectively varying a degree of alignment between respective orifices defined through each of the valve seat and valve member, ranging from no alignment defining a closed condition of the bypass valve, to at least partial alignment defining an open condition of the bypass valve.

In accordance with the invention, a catalyst is disposed in the annular bypass passage. In one embodiment as described herein, the catalyst is located upstream of the bypass valve. Accordingly, the exhaust gases do not have to first pass through the bypass valve and conduit system before reaching the catalyst.

The catalyst can comprise a metallic substrate coated with a catalyst material. The metallic substrate in one embodiment comprises a plurality of metal fins spaced apart to define flow passages therebetween for the exhaust gases passing through the bypass passage. In one embodiment the fins have an undulating configuration for increasing a surface area of each fin. The fins can be supported in a generally annular cage.

The bypass arrangement can further comprise a rotary drive member penetrating through the turbine housing, and a drive arm attached to a distal end of the rotary drive member. A distal end of the drive arm engages the valve member such that rotation of the rotary drive member causes the drive arm to rotate the valve member about the axis. In one embodiment, the drive member penetrates through the turbine housing in a generally radial direction, and in order to accommodate the drive arm the catalyst extends circumferentially about less than a full 360° circumference of the bypass passage such that there is a portion of the circumference that is not occupied by the catalyst, and the drive arm is disposed within this portion of the circumference. In another embodiment, the drive member penetrates in an axial direction and a full 360° catalyst can be accommodated.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:
FIG. 1 is an axial cross-sectional view of a prior-art turbocharger;
FIG. 2 is an axially sectioned perspective view of a turbine housing assembly in accordance with an embodiment of the invention;
FIG. 3 is a perspective view of the turbine housing assembly of FIG. 2;
FIG. 4 is an axially sectioned perspective view of a sub-assembly of the turbine housing assembly of FIG. 2;
FIG. 5 is a perspective view of a catalyst for the turbine housing assembly;
FIG. 6 is an axial end view of the catalyst of FIG. 5;
FIG. 7 is a perspective view of the sub-assembly of FIG. 4;
FIG. 8 is another perspective view of the sub-assembly of FIG. 4;
FIG. 9 is a perspective view similar to FIG. 8, but with the valve seat and valve member omitted;
FIG. 10 is an axial cross-sectional view of a turbine housing assembly in accordance with a further embodiment in which the rotary member for driving the drive arm is oriented axially rather than radially.

### DETAILED DESCRIPTION OF THE DRAWINGS

The present disclosure now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

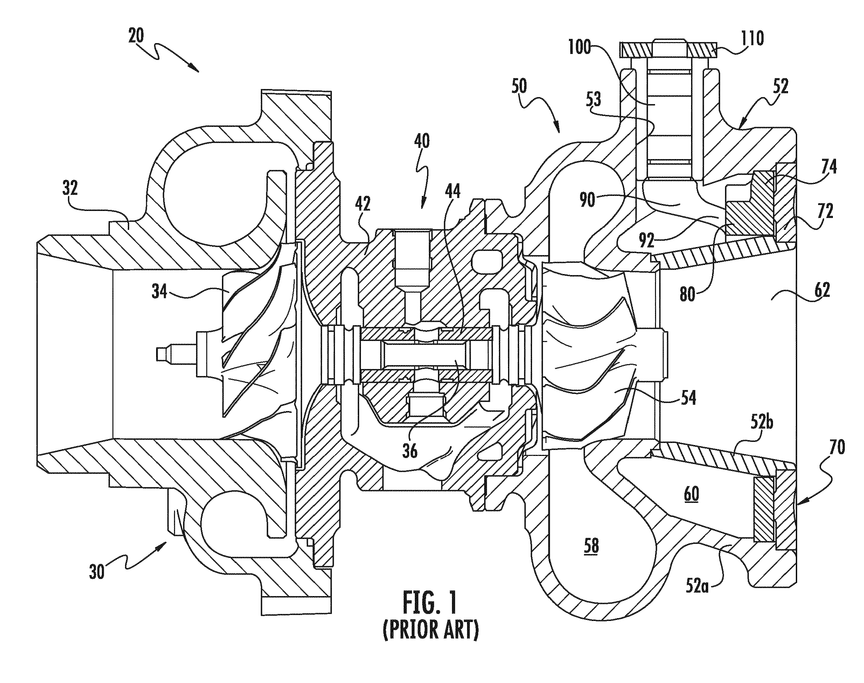

FIG. 1 depicts a turbocharger **20** in accordance with U.S. Patent No. 8,353,664 belonging to the applicant, the entire disclosure of which is hereby incorporated herein by reference. As shown in FIG. 1, major sub-assemblies of the turbocharger **20** include a compressor assembly **30,** a center housing assembly **40,** and a turbine assembly **50.** The compressor assembly **30** includes a compressor housing **32** and a compressor wheel **34** mounted therein and attached to one end of a rotary shaft **36.** The center housing assembly **40** includes a center housing **42** that is affixed to the compressor housing **32** and that contains bearings **44** for the rotary shaft **36.** The turbine assembly **50** includes a turbine housing **52** and a turbine wheel **54** mounted therein and attached to the opposite end of the rotary shaft **36.**

The turbine housing **52** defines an exhaust gas inlet **56** through which exhaust gas from an internal combustion engine is received, and a volute **58** that receives the exhaust gas from the inlet **56** and distributes the gas around the 360° volute for feeding into the turbine wheel **54.** The exhaust gas inlet **56** is also open to a generally annular bypass passage **60** defined in the turbine housing **52.** The bypass passage **60** surrounds an axial bore **62** defined in the turbine housing. Exhaust gas that has passed through the turbine wheel **54** is exhausted from the turbine housing through the bore **62.** The bypass passage **60** provides an alternative pathway for exhaust gas to flow without first having to pass through the turbine wheel **54.**

An annular bypass valve **70** is installed in the bypass passage **60** for regulating flow through the bypass passage. The major components of the annular bypass valve **70** include a stationary valve seat **72** and a rotary valve member **74** in abutting engagement with the valve seat. The valve seat **72** and valve member **74** are arranged between an annular outer portion **52a** of the turbine housing **52** and an annular inner member **52b.** As shown, the inner member 52b is formed separately from the turbine housing **52** and is connected with an integral portion of the turbine housing. Alternatively, the inner member **52b** can be an integral part of the turbine housing. Making the inner member **52b** as an integral part of the turbine housing can improve rigidity and robustness of the construction. The outer portion **52a** and inner member **52b** together define an annular space **60** for receiving the valve member **74** and the valve seat **72.** The valve member **74** is prevented from moving axially upstream by a shoulder defined by the outer portion **52a** of the turbine housing, although during operation pressure of the exhaust gas urges the valve member **74** in the downstream direction. The valve member **74** is not constrained by the turbine housing but is free to rotate about its axis and to move axially against the valve seat **72.** The valve seat **72** is prevented from moving axially, radially, or rotationally. A radially outer edge portion of the upstream face of the valve seat **72** abuts a shoulder defined by the outer portion **52a** of the turbine housing, and the radially inner edge portion of the upstream face abuts a shoulder defined by the inner member **52b,** thereby putting the valve seat in a precise axial location as dictated by these shoulders.

The valve seat **72** is a generally flat ring-shaped or annular member having a plurality of orifices (not visible in FIG. 1) circumferentially spaced apart about a circumference of the valve seat, the orifices extending generally axially between the upstream and downstream faces of the valve seat. The orifices can be uniformly spaced about the circumference of the valve seat, or non-uniform spacing of the orifices is also possible and can be advantageous in some circumstances. The valve seat **72** can be formed by any of various processes and materials. For example, processes that can be used include casting, casting and machining, and stamping.

The rotary valve member **74** is a generally flat ring-shaped or annular member having a plurality of orifices (not visible in FIG. 1) circumferentially spaced apart about a circumference of the valve seat, the orifices extending generally axially between the upstream and downstream faces of the valve member. The valve member 74 has a substantially circular cylindrical outer edge and a substantially circular cylindrical inner edge, the outer and inner edges being coaxial with respect to a central longitudinal axis of the valve member, which axis is also substantially coincident with a central longitudinal axis of the valve seat **72.** The outer portion **52a** of the turbine housing and the inner member **52b** both define substantially circular bearing surfaces for the outer and inner edges of the rotary valve member **74** and there are clearances therebetween, so that the valve member can be rotated in one direction or the opposite direction about its central longitudinal axis in order to vary a degree of alignment between the valve member orifices and the valve seat orifices.

The valve member **74** further defines a fork or yoke comprising a pair of projections **80** that project axially from the upstream face of the valve member. The projections 80 are circumferentially spaced apart by a small distance sufficient to accommodate the distal end **92** of an L-shaped drive arm **90** that is rigidly affixed to a distal (radially inner) end of a rotary drive member **100.** The rotary drive member **100** penetrates through the turbine housing **52** via a bore **53** that connects with the generally annular bypass passage **60.** The bore **53** in the illustrated embodiment is oriented radially, but alternatively the bore could be axial, and could be defined in a member (not shown) that is formed separately from the turbine housing. In any case, the proximal end of the rotary drive member **100** is located outside the turbine housing **52** and is rigidly affixed to a link **110** that is caused to rotate by a suitable actuator (not shown) to in turn rotate the rotary drive member **100** in one direction or the opposite direction. As a result, the drive arm **90** affixed to the distal end of the rotary drive member **100** in turn causes the valve member **74** to be rotated in one direction or the opposite direction about its axis.

The present disclosure describes an improvement to the turbocharger of FIG. 1, specifically in the context of a system employing a catalytic exhaust gas treatment device, or "catalyst" as used herein. Typically in a turbocharged engine system, a catalyst is disposed in the exhaust system, downstream of the turbine. Thus, whether exhaust gas passes through the turbine wheel or is bypassed around the turbine wheel by the opening of a waste gate or bypass valve, the exhaust gas then passes through the catalyst before being discharged from the exhaust pipe. A drawback of this arrangement is that during start-up when the engine and turbocharger and catalyst are in a cold state, even though the waste gate or bypass valve is opened to bypass the exhaust gases around the turbine wheel, which operates as a heat sink, heating of the catalyst is still relatively slow because the bypass system itself is a heat sink that absorbs some of the heat of the gases. This delays the "light-off" of the catalyst.

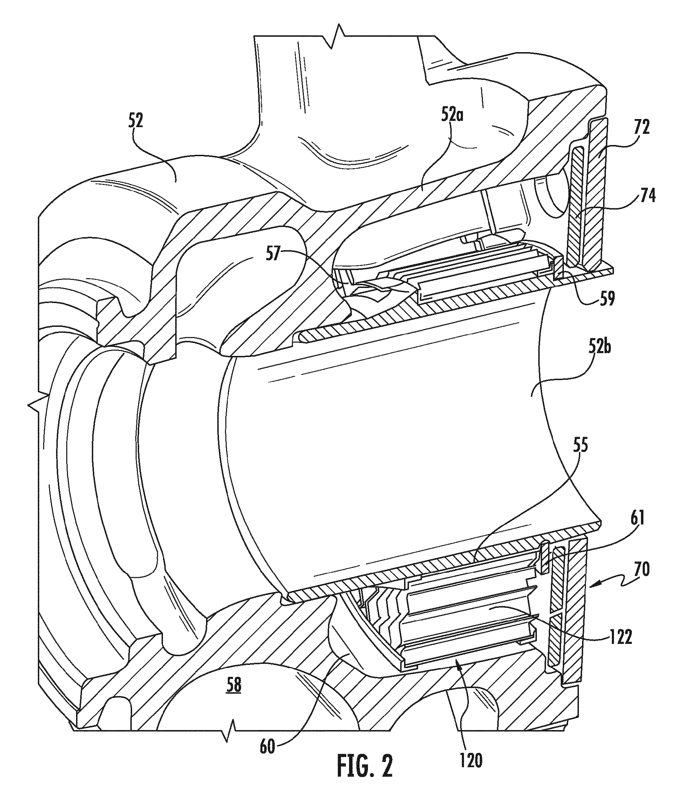

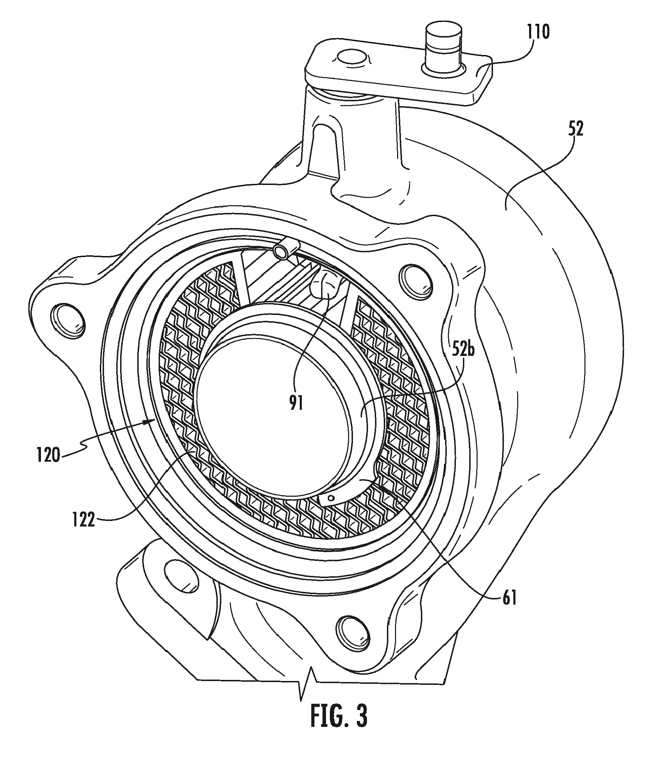

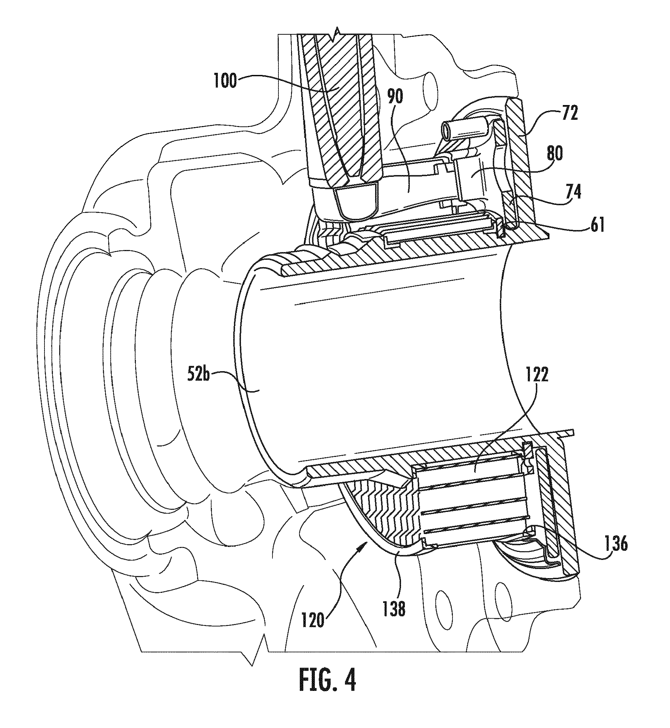

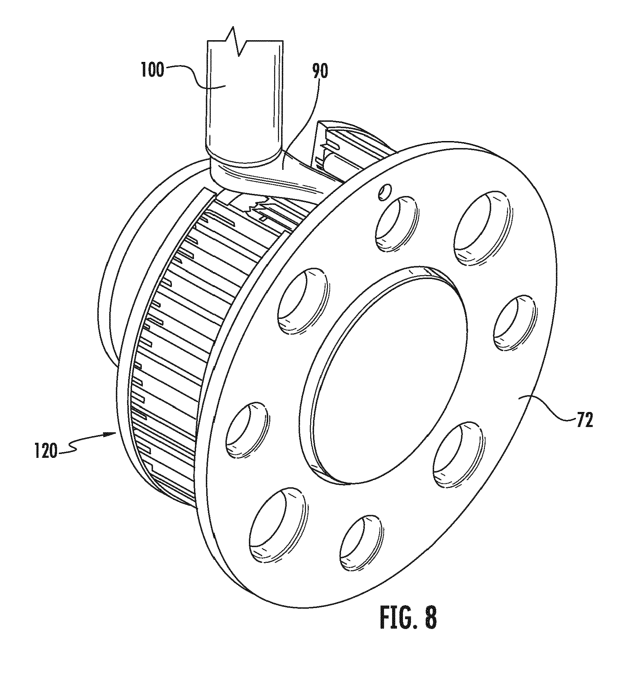

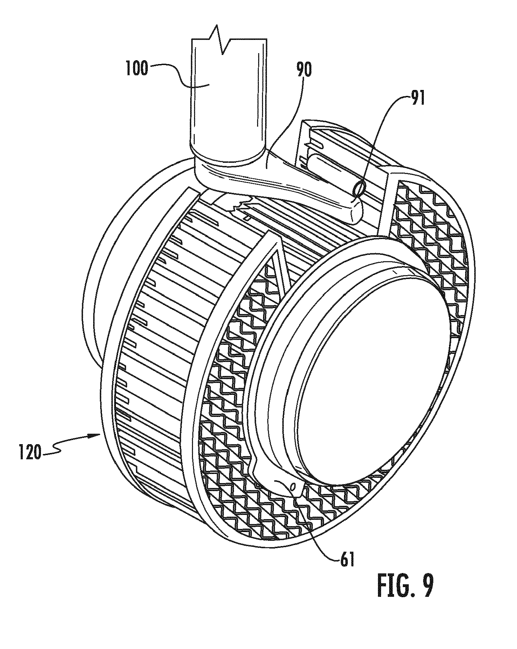

The present invention aims at reducing or mitigating this problem. In accordance with the invention, as depicted in FIGS. 2 through 9, a catalyst **120** is disposed in the annular bypass passage **60** of the turbine housing. In the illustrated embodiment, the catalyst **120** is located upstream of the bypass valve **70.** The inner member **52b** that in part forms the annular bypass passage **60** has a generally tubular shape, and its radially outer surface has a recessed region **55** delimited on its upstream side by an outwardly protruding shoulder **57** and on its downstream side by a ring **61** that is formed separately from the inner member **52b** and is received in a groove **59** defined in the outer surface of the inner member **52b.** The shoulder **57** and the ring **61** retain the catalyst **120** in position with respect to the axial direction.

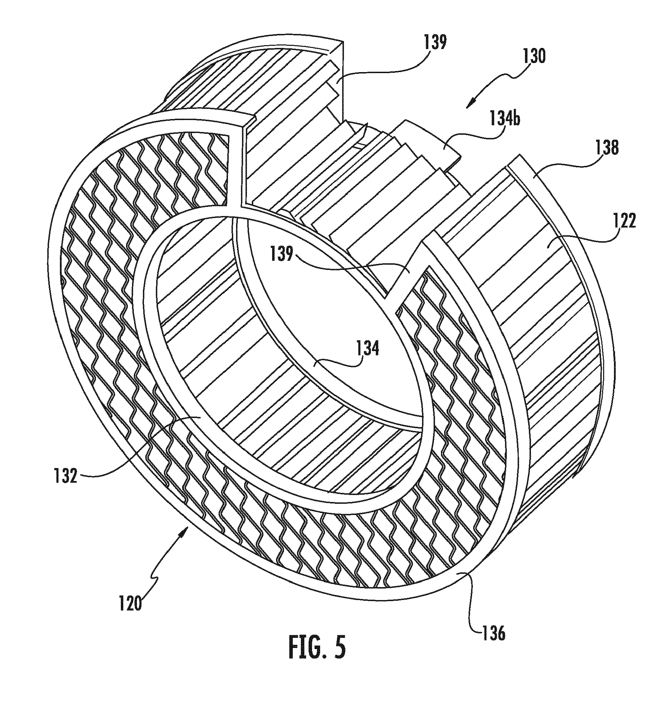

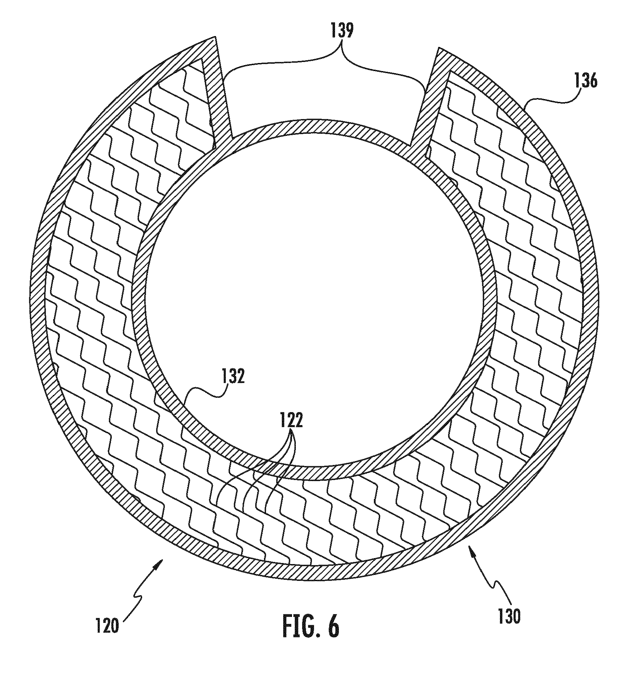

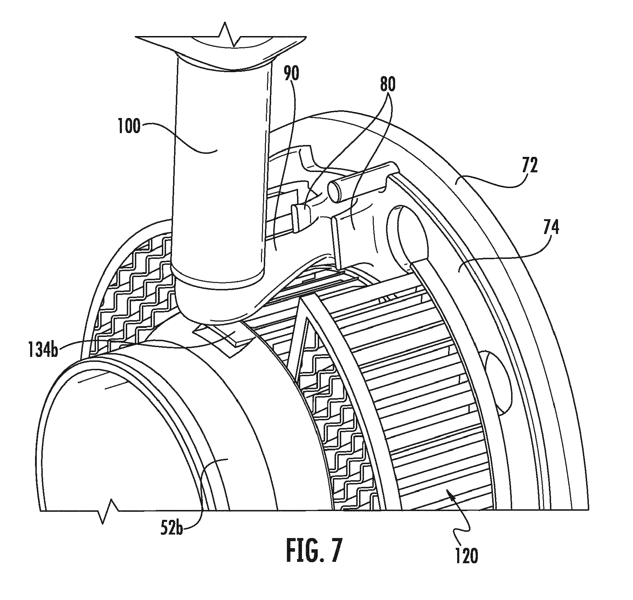

As best seen in FIGS. 5 and 6, the catalyst **120** comprises a plurality of undulating metallic fins **122** that are spaced apart to define flow passages therebetween. The metallic fins are coated with a catalyst material of suitable type. The fins are disposed within a cage **130** of generally annular configuration. The cage includes a pair of inner rings **132** and **134** that are axially spaced apart, and a pair of outer rings **136** and **138** that likewise are axially spaced apart. The two inner rings extend 360° about the circumference but the two outer rings extend less than 360°, and at the points where they terminate in the circumferential direction they are joined to their corresponding inner rings by radial members **139.** The fins **122** extend between the inner and outer rings and extend axially between the pair of rings **132, 136** and the pair of rings **134, 138.** There are thus a multiplicity of passages each defined between two adjacent fins **122** and each extending generally axially through the catalyst **120.** In the space delimited in the circumferential direction by the radial members **139,** the fins **122** are generally not present in order to make space for the drive arm **90** that actuates the valve member **74** in the manner previously described. There is a locating member **134b** that projects axially from the inner ring **134,** in an upstream direction. The locating member **134b** is aligned with the interrupted portion of the catalyst **120** that makes room for the drive arm **90.** As shown in FIG. 7, the locating member **134b** engages a slot in the inner member **52b** of the bypass passage so as to rotationally orient the catalyst.

It will be understood that the catalyst **120** is useful for treating the bypass flow but is not effective for treating the exhaust gases that pass through the turbine wheel. Accordingly, for treating the gases passing through the turbine wheel, a further catalytic device (not shown) would be needed downstream of the turbine. Generally, the further catalytic device would treat for reducing hydrocarbon (HC), carbon monoxide (CO), and NOₓ, while the catalyst **120** for the bypass flow would treat primarily for HC and CO reduction only. This is because NOₓ is produced primarily at high combustion temperatures that do not exist during a cold start-up when the bypass valve **70** is opened and exhaust gases are passing through the catalyst **120.** However, the catalyst **120** could also treat for NOₓ reduction if desired.

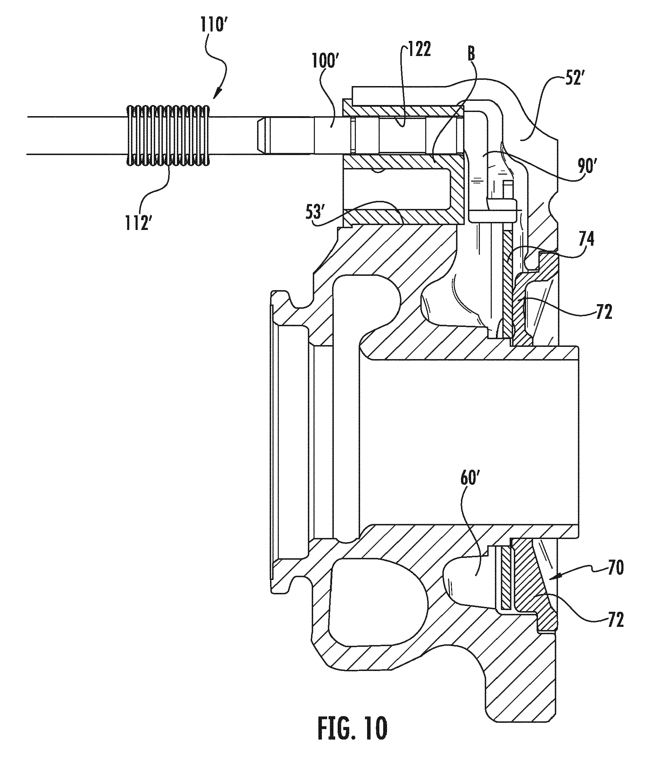

The embodiment described above has a rotary drive member **100** that is oriented generally radially, and as a consequence of that orientation and the need to provide room for the drive arm **90,** the catalyst **120** cannot be a full 360° ring. FIG. 10 illustrates an alternative embodiment of a turbine housing assembly having an axially oriented rotary drive member **100'** having one end that connects to a drive arm **90',** which makes possible a full 360° catalyst. This embodiment is described in greater detail in Applicant's co-pending U.S. Patent Application No. 13/927,399, the entire disclosure of which is hereby incorporated herein by reference. Connected to the opposite end of the drive member **100'** is a drive shaft **110'.** The drive arm **90'** is generally "L"-shaped, having a portion that extends generally perpendicular to the drive axis of the drive shaft, and a distal end (i.e., the end remote from the end that is connected to the drive member **100')** that defines a pin or rod portion that extends generally parallel to the drive axis and engages the valve member **74.** The drive shaft **110'** is rotatably driven by an output shaft of a rotary actuator (not shown). Rotation of the rotary actuator's output shaft causes the drive member **100'** to rotate about the drive axis, which causes the drive shaft **110'** to rotate and therefore the distal end of the drive arm **90'** sweeps through an arc, thereby causing the valve member **74** to rotate about its longitudinal axis. Thus, rotation of the actuator in one direction will rotate the valve member in a first direction (opposite to that of the actuator), and rotation of the actuator in the other direction will cause the valve member to rotate in a second direction.

It will be appreciated that because of the axial orientation of the drive member **100'** and the resulting radial orientation of the drive arm **90',** the bypass passage **60'** can, if properly designed, accommodate a full 360° catalyst (not shown). Such design would generally entail increasing the axial length of the outlet portion of the turbine housing **52'** so as to increase the axial length of the bypass passage to make room for the catalyst.

In accordance with an embodiment of the invention, as illustrated in the figures, the rotary drive shaft **110'** can include a lengthwise section whose bending flexibility is substantially greater than that of the remaining portions of the drive member. The bending flexibility preferably is substantially greater about multiple axes that are not parallel to the drive axis about which the drive member rotates to impart movement to the drive arm **90'.** In one embodiment, as shown, the section of greater flexibility is a bellows **112'.** The drive shaft is preferably formed of a resilient metal such that the bellows can act as a spring in axial compression and will also return to a straight (i.e., unbent) condition after any bending force is removed.

As noted, the bellows can act like a compression spring along the drive axis. This can be used to advantage for taking up any axial play in the linkage between the actuator and the drive arm **90'.** Accordingly, the bellows can be axially compressed so as to create an axial compressive pre-load in the bellows.

The turbine assembly includes a bushing ***B*** for the drive member **100'.** The bushing is installed in a cavity **53'** defined in the turbine housing **52'.** The bushing defines a through passage for the drive member **100'.** The through passage has a cylindrical inner surface of a diameter sized to fit closely about the drive member **100'** while still allowing the drive member to freely rotate about the axis defined by the inner surface. An end of the drive member **100'** extends out the end of the through passage and connects to the drive arm **90'.**

In one embodiment, the drive member **100'** and drive arm **90'** together constitute a single integral, monolithic part. Thus, the drive member is configured so that it can be inserted through the passage of the bushing ***B*,** after which the end of the drive member is affixed to one end of the drive shaft **110'.**

The bushing ***B*** can define one or two mechanical stops for the drive arm **90'** for limiting the rotation of the drive arm in a clockwise and/or counterclockwise direction.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A turbocharger comprising:
a compressor wheel mounted within a compressor housing;
a turbine wheel mounted within a turbine housing and connected to the compressor wheel by a shaft;
the turbine housing defining an exhaust gas inlet connected to a volute that surrounds the turbine wheel, the turbine housing further defining an axial bore through which exhaust gas that has passed through the turbine wheel is discharged from the turbine housing;
the turbine housing defining an annular bypass passage surrounding the bore and arranged to allow exhaust gas to bypass the turbine wheel;
an annular bypass valve disposed in the bypass passage, the bypass valve comprising a fixed annular valve seat and a rotary annular valve member arranged coaxially with the valve seat relative to an axis, the valve member being disposed against the valve seat and being rotatable about the axis for selectively varying a degree of alignment between respective orifices defined through each of the valve seat and valve member, ranging from no alignment defining a closed condition of the bypass valve, to at least partial alignment defining an open condition of the bypass valve; and
a catalyst disposed in the annular bypass passage.

2. The turbocharger of claim 1, wherein the catalyst is located upstream of the bypass valve.

3. The turbocharger of claim 1, wherein the catalyst comprises a metallic substrate coated with a catalyst material.

4. The turbocharger of claim 3, wherein the metallic substrate comprises a plurality of fins spaced apart to define flow passages therebetween for the exhaust gas in the bypass passage.

5. The turbocharger of claim 4, wherein the fins have an undulating configuration for increasing a surface area of each fin.

6. The turbocharger of claim 5, wherein the fins are supported in a generally annular cage.

7. The turbocharger of claim 1, further comprising a rotary drive member penetrating through the turbine housing, and a drive arm attached to a distal end of the rotary drive member, a distal end of the drive arm engaging the valve member such that rotation of the rotary drive member causes the drive arm to rotate the valve member about the axis.

8. A turbine housing assembly for a turbocharger, comprising:
a turbine housing for accommodating a turbine wheel, the turbine housing defining an exhaust gas inlet connected to a volute, the turbine housing further defining an axial bore through which exhaust gas that has passed through the turbine wheel is discharged from the turbine housing;
the turbine housing defining an annular bypass passage surrounding the bore and arranged to allow exhaust gas to bypass the turbine wheel;
an annular bypass valve disposed in the bypass passage, the bypass valve comprising a fixed annular valve seat and a rotary annular valve member arranged coaxially with the valve seat relative to an axis, the valve member being disposed against the valve seat and being rotatable about the axis for selectively varying a degree of alignment between respective orifices defined through each of the valve seat and valve member, ranging from no alignment defining a closed condition of the bypass valve, to at least partial alignment defining an open condition of the bypass valve; and
a catalyst disposed in the annular bypass passage.

9. The turbine housing assembly of claim 8, wherein the catalyst is located upstream of the bypass valve.

10. The turbine housing assembly of claim 8, wherein the catalyst comprises a metallic substrate coated with a catalyst material.

11. The turbine housing assembly of claim 10, wherein the metallic substrate comprises a plurality of fins spaced apart to define flow passages therebetween for the exhaust gas in the bypass passage.

12. The turbine housing assembly of claim 11, wherein the fins have an undulating configuration for increasing a surface area of each fin.

13. The turbine housing assembly of claim 12, wherein the fins are supported in a generally annular cage.

14. The turbine housing assembly of claim 8, further comprising a rotary drive member penetrating through the turbine housing, and a drive arm attached to a distal end of the rotary drive member, a distal end of the drive arm engaging the valve member such that rotation of the rotary drive member causes the drive arm to rotate the valve member about the axis.
